# EUROPÄISCHE PATENTANMELDUNG

(11) **EP 4 749 863 A1**
(43) Veröffentlichungstag der Anmeldung: **27.05.2026**
(21) Anmeldenummer: 25211423.6
(22) Anmeldetag: 27.10.2025
(51) Int. Cl.: H02H 9/08

(54) **VERFAHREN UND VORRICHTUNGEN ZUR MINIMIERUNG EINES KORROSIONSGEFÄHRDENDEN DC-SCHUTZLEITERSTROMS**

(30) Priorität: 18.11.2024 DE 102024133671
(71) Anmelder: Bender GmbH & Co. KG, 35305 Grünberg (DE)
(72) Erfinder: Hackl, Dieter, 35463 Fernwald (DE)
(74) Vertreter: advotec.

(57) **Zusammenfassung**

Die Erfindung betrifft Verfahren und Vorrichtungen zur Minimierung eines korrosionsgefährdenden DC-Schutzleiterstroms für ein über einen als Fundamenterder ausgebildeten Schutzleiter geerdetes Gleichstromsystem mit angeschlossenem SK 1-Betriebsmittel. Symmetrierverfahren beschreiben ein Einspeisen eines Symmetrierstroms an einem Erdanschlusspunkt an einem Gehäuse des SK 1-Betriebsmittels über einen Ausgangsstromkreis zwischen einem nicht fehlerbehafteten aktiven Leiter und dem Erdanschlusspunkt, wobei ein Einstellen einer Symmetrierstrom-Polarität und einer Symmetrierstrom-Amplitude des Symmetrierstroms derart erfolgt, dass der DC-Schutzleiterstrom in dem Fundamenterder minimiert wird. Im Unterschied zu dieser Gleichstrom-Symmetrierung wird bei der Gleichstrom-Kompensation ein Kompensationsstrom über einen Ausgangsstromkreis, der sich zwischen dem fehlerbehafteten aktiven Leiter und dem Erdanschlusspunkt erstreckt, an dem Erdanschlusspunkt des SK 1-Betriebsmittel-Gehäuses eingespeist. Der Kompensationsstrom wird hinsichtlich der Polarität und der Amplitude so eingestellt, dass der DC-Schutzleiterstrom in dem Fundamenterder minimiert wird. Die Einstellung des Symmetrierstroms und des Kompensationsstroms erfolgt über das gesteuerte oder geregelte Schalten von Stromquellen, Widerständen oder eines PWM-Signals.

## Beschreibung

Die Erfindung betrifft Verfahren und Vorrichtungen zur Minimierung eines korrosionsgefährdenden DC-Schutzleiterstroms für ein über einen als Fundamenterder ausgebildeten Schutzleiter geerdetes Gleichstromsystem mit angeschlossenem SK 1-Betriebsmittel.

In industriellen Stromversorgungssystemen, die mit einer geerdeten Netzform betrieben werden, sowie bei geerdet betriebenen Starkstrommaschinen werden im Normalbetrieb wesentlich höhere Schutzleiterströme toleriert als beispielsweise in häuslichen Anwendungsbereichen.

Bei Wechsel (AC)- und Drehstrom (3AC)-Netzen ergeben sich diese hohen Schutzleiterströme in der Regel bei einer Kombination von im System vorhandenen großen Netzableitkapazitäten und dem Einsatz von Umrichter-Betriebsmitteln.

Mit zunehmender Verbreitung von Betriebsmitteln, die aus Gleichstrom (DC)-Systemen mit einer geerdeten Netzform gespeist werden, und zunehmender Verbreitung von geerdet betriebenen Wechselstromsystemen mit galvanisch verbundenen Gleichstromkreisen entstehen bei zu hohen Gleichstrom-Schutzleiterströmen (DC-Schutzleiterströmen) selbst bei verstärkten Schutzmaßnahmen hinsichtlich des Festanschlusses von Betriebsmitteln und robuster Schutzleiterauslegung erhöhte Risiken im Hinblick auf Elektrokorrosions-Vorgänge bei Erdungsanlagen (Schutzerdungssystem) in Gebäuden.

Dies betrifft insbesondere Fundamenterder, die im Beton eines Gebäudefundamentes als geschlossener Ring entlang der Außenkanten eingebettet sind. Der Fundamenterder ist mit der Bewehrung des Fundamentes oder der Bodenplatte mittels Schraub-, Klemm- oder Schweißverbindungen elektrisch leitend verbunden. Auf der DC-Seite ist in dem hier betrachteten Anwendungsfall ein Betriebsmittel mit schutzgeerdetem Gehäuse (SK I-Betriebsmittel) mittels Schutzleiter angeschlossen. Ebenfalls betrachtet wird der Anwendungsfall, dass mehrere SK 1-Betriebsmittel in einem mit dem Schutzleiter (Erdungskabel) über das Schaltschrank-Gehäuse geerdeten Schaltschrank angeordnet sind.

Werden passivierbare Metalle mit elektrolytischen Materialien wie dem Beton des Gebäudefundaments in Kontakt gebracht, so laufen Korrosionsvorgänge ohne den Einfluss äußerer Gleichspannungsquellen nur bis zum Erreichen eines Gleichgewichtszustandes ab. Bekannt ist hier die Verwendung von rostbraunen Baustahlmatten bei der Erstellung von Betonfundamenten.

Ist die Passivierung des Baustahls weitgehend abgeschlossen, so finden nach dem Einbringen der Baustahlmatten in den Fundamentbeton im Idealfall kaum noch Korrosionsvorgänge statt.

Um unter dem Einfluss einer externen Gleichstromquelle den Passivierungszustand in der Metall-Elektrolyt-Kombination zu verlassen und Korrosionsvorgänge wieder in Gang zu setzen, muss ein bestimmtes Aktivierungspotential überschritten werden.

Die Norm EN 50162 gibt für die Kombination Baustahl-Beton ein typisches Aktivierungspotential von 200 mV an. Je nach Metall-Elektrolyt-Kombination variieren die Aktivierungspotentiale, liegen aber meist im Bereich unter 1 V.

Wird das spezifische Aktivierungspotential durch einen zu hohen DC-Schutzleiterstrom in dem Fundamenterder überschritten, so ist damit zu rechnen, dass an metallischen Bauteilen (Baustahlmatten), die über den Fundamenterder geerdet sind und Kontakt zu elektrolytischem Material (Beton) haben, Korrosionsprozesse einsetzen und die Lebensdauer der Konstruktion beeinflussen können.

Aus dem Stand der Technik sind verschiedene Maßnahmen zur Reduzierung der Korrosion durch Gleichstrom-Streuströme bekannt. So empfiehlt die Norm EN 50162 unter anderem den Betrieb mit ungeerdeter Netzform, die Verwendung von Schutzbeschichtungen für Metallteile oder den Einsatz von Korrosionsschutzgeräten.

Darüber hinaus werden Maßnahmen ergriffen wie die Verwendung eines Schutzleiters mit deutlich größerem Querschnitt oder der Einsatz eines zusätzlichen Schutzpotentialausgleichs mit isoliert verlegtem Schutzleiter.

Sämtliche vorgenannten Maßnahme sind aber in nachteiliger Weise mit hohen Material- und Installationskosten verbunden.

Der vorliegenden Erfindung liegt somit die Aufgabe zugrunde, für ein SK 1-Betriebsmittel oder für mehrere in einem geerdeten Schaltschrank angeordnete SK 1-Betriebsmittel, das/die in einem geerdeten Gleichstromsystem über einen als Fundamenterder ausgebildeten Schutzleiter angeschlossen ist/sind, ein Verfahren und eine Vorrichtung zu beschreiben, die in wirtschaftlich vertretbarer Weise den DC-Schutzleiterstrom in dem Fundamenterder minimieren, sodass die für den Start von Korrosionsvorgängen erforderlichen spezifischen Aktivierungspotentiale in der Erdungsanlage nicht überschritten werden.

Der grundsätzliche Erfindungsgedanke zur Lösung der Aufgabe besteht darin, für das schutzgeerdete Betriebsmittel (SK 1-Betriebsmittel) und/oder für mehrere in einem geerdeten Schaltschrank angeordnete SK 1-Betriebsmittel durch schaltungstechnische Maßnahmen einen noch akzeptablen Gleichstromanteil an dem Erdanschlusspunkt (eines Gehäuses) des SK 1-Betriebsmittels oder des geerdeten Schaltschranks herbeizuführen und somit den DC-Schutzleiterstrom zu minimieren, um die Aktivierung von Korrosionsprozessen in Erdungsanlagen für Gebäude zu vermeiden.

Hierzu werden Verfahren und Vorrichtungen zur Gleichstrom-Symmetrierung mittels eines Symmetrierstroms sowie Verfahren und Vorrichtungen zur Gleichstrom-Kompensation mittels eines Kompensationsstroms vorgeschlagen. Dabei stellen das Gleichstromsystem einschließlich des Schutzleiters sowie das angeschlossene SK 1-Betriebsmittel die Anwendungsumgebung der Erfindung dar und sind nicht Bestandteil der Erfindung.

Bezogen auf ein Symmetrierverfahren wird die zugrundeliegende Aufgabe gelöst durch Einspeisen eines Symmetrierstroms an einem Erdanschlusspunkt an einem Gehäuse des SK 1-Betriebsmittels über einen Ausgangsstromkreis zwischen einem nicht fehlerbehafteten aktiven Leiter und dem Erdanschlusspunkt, wobei ein Einstellen einer Symmetrierstrom-Polarität und einer Symmetrierstrom-Amplitude des Symmetrierstroms derart erfolgt, dass der DC-Schutzleiterstrom in dem Fundamenterder minimiert wird.

Bei dem (Gleichstrom-)Symmetrierverfahren wird der Symmetrierstrom über einen Ausgangsstromkreis, der sich zwischen dem nicht fehlerbehafteten aktiven Leiter und dem Erdanschlusspunkt an dem Gehäuse des SK 1-Betriebsmittels erstreckt, an dem Erdanschlusspunkt des SK 1-Betriebsmittel-Gehäuses in das Schutzerdungssystem eingespeist - in dem hier betrachteten Gleichstromsystem mit zwei aktiven Leitern entspricht bei einem einpolig (unsymmetrisch) auftretenden Isolationsfehler der nicht fehlerbehaftete aktive Leiter dem aktiven Leiter gegenphasiger Polarität.

Der Symmetrierstrom wird hinsichtlich der Polarität (Symmetrierstrom-Polarität) und der Amplitude (Symmetrierstrom-Amplitude) so eingestellt, dass der DC-Schutzleiterstrom in dem Fundamenterder minimiert wird, also keine Überschreitung des spezifischen Aktivierungspotentials stattfindet.

In weiterer Ausgestaltung erfolgt das Einstellen der Symmetrierstrom-Polarität und der Symmetrierstrom-Amplitude durch Erfassen der Amplitude und der Polarität eines von dem Gleichstromsystem in den Schutzleiter abgeleiteten DC-Fehlerstroms vor dem Erdanschlusspunkt mittels eines Stromsensors, Erzeugen einer zu dem erfassten DC-Fehlerstrom proportionalen Messspannung mittels des Stromsensors, Filtern der Messspannung mittels einer Filtereinrichtung und Erzeugen des zu der Messspannung proportionalen Symmetrierstroms mittels einer spannungsgesteuerten Stromquelle.

Der an dem fehlerbehafteten Leiter in den Schutzleiter abgeleitete und mit einem Stromsensor erfasste DC-Fehlerstrom erzeugt in dem Stromsensor eine dem erfassten DC-Fehlerstrom proportionale Messspannung. Ausgegangen wird dabei von einem an einem der aktiven Leiter des geerdeten Gleichstromsystems auftretenden DC-Fehlerstrom aufgrund eines (unsymmetrischen) Isolationsfehlers. Nach einer Filterung der Messspannung wird in der spannungsgesteuerten Stromquelle der dieser Messspannung proportionale Symmetrierstrom erzeugt und über den Ausgangsstromkreis an dem Erdanschlusspunkt des SK 1-Betriebsmittel-Gehäuses eingespeist. Ausgehend von dem Erfassen des DC-Fehlerstroms wird somit im Sinne einer Steuerung der Symmetrierstrom so eingestellt, dass der DC-Schutzleiterstrom in dem Fundamenterder minimiert wird.

Alternativ zu der vorgenannten Steuerung kann das das Einstellen der Symmetrierstrom-Polarität und der Symmetrierstrom-Amplitude durch eine Regelung einer spannungsgesteuerten Stromquelle erfolgen.

Dabei wird vorzugsweise der DC-Schutzleiterstrom auf dem Schutzleiter erfasst und mittels Rückkopplung auf die spannungsgesteuerte Stromquelle zurückgeführt, sodass der Symmetrierstrom nach Polarität und Amplitude so eingestellt werden kann, dass der DC-Schutzleiterstrom im Hinblick auf einen maximal zulässigen Wert (herunter)geregelt wird. Der DC-Schutzleiterstrom wird somit als maximal zulässiger, voreinstellbarer Sollwert (Führungsgröße) aufgefasst, die durch den DC-Fehlerstrom als Störgröße beeinflusst wird. Eine Regelung erscheint als Alternative zur Steuerung insbesondere dann sinnvoll, wenn der DC-Fehlerstrom als unkontrollierbare, schwer messbare Störung in Erscheinung tritt.

Alternativ zur Verwendung der spannungsgesteuerten Stromquelle erfolgt das Einstellen der Symmetrierstrom-Polarität und der Symmetrierstrom-Amplitude durch Erfassen der Amplitude und der Polarität eines von dem Gleichstromsystem in den Schutzleiter abgeleiteten DC-Fehlerstroms vor dem Erdanschlusspunkt mittels eines Stromsensors, Erzeugen einer zu dem erfassten DC-Fehlerstrom proportionalen Messspannung mittels des Stromsensors, Filtern der Messspannung mittels einer Filtereinrichtung und durch Schalten von Ausgleichswiderständen mittels einer Widerstands-Schalteinrichtung in dem Ausgangsstromkreis zwischen dem nicht fehlerbehafteten aktiven Leiter und dem Erdanschlusspunkt, um den zu der Messspannung proportionalen Symmetrierstrom zu erzeugen.

In dieser Ausgestaltung wird von dem nicht fehlerbehafteten aktiven Leiter ein symmetrierender Teilstrom als Symmetrierstrom abgeleitet. Dessen Größe wird durch geschaltete Ausgleichswiderstände in dem Ausgangsstromkreis entsprechend dem erfassten DC-Fehlerstrom bestimmt, sodass sich hinter dem Erdanschlusspunkt der minimale DC-Schutzleiterstrom einstellt.

Die Ausgleichswiderstände können (körperlich) als ohmsche oder elektronische Widerstände ausgeführt sein.

Bevorzugt erfolgt das Schalten der Ausgleichswiderstände iterativ gesteuert durch einen Näherungsalgorithmus.

Die Minimierung des DC-Schutzleiterstroms kann über einen Algorithmus zur sukzessiven Approximation in Richtung des minimalen DC-Schutzleiterstroms ausgeführt werden.

Alternativ zu der (iterativen) Steuerung des Schaltens der Ausgleichswiderstände erfolgt das Einstellen der Symmetrierstrom-Polarität und der Symmetrierstrom-Amplitude durch eine Regelung mit einer Widerstands-Schalteinrichtung.

Dabei wird der DC-Schutzleiterstrom auf dem Schutzleiter erfasst und mittels Rückkopplung auf die Widerstands-Schalteinrichtung zurückgeführt, sodass der Symmetrierstrom durch Schalten der Ausgleichswiderstände nach Polarität und Amplitude so eingestellt werden kann, dass der DC-Schutzleiterstrom im Hinblick auf einen maximal zulässigen Wert (herunter)geregelt wird.

Als weitere Alternative zu der Verwendung der spannungsgesteuerten Stromquelle oder dem Schalten der Ausgleichswiderstände kann als Symmetrierstrom ein Symmetrier-PWM-Signal mittels eines PWM-Generators erzeugt werden.

Der Symmetrierstrom kann als digital moduliertes Signal in Form eines PWM-Signals erzeugt und an dem Erdanschlusspunkt eingespeist werden. Die Frequenz und der Tastgrad ergeben den zur Minimierung des DC-Schutzleiterstroms erforderlichen Symmetrierstrom.

Neben dem vorgenannten Verfahren der (Gleichstrom-)Symmetrierung mittels Symmetrierstrom wird die zugrundeliegende Aufgabe mit einem Verfahren zur (Gleichstrom-)Kompensation mittels eines Kompensationsstroms gelöst durch Einspeisen eines Kompensationsstroms an einem Erdanschlusspunkt an einem Gehäuse des SK-1-Betriebsmittels über einen Ausgangsstromkreis zwischen einem fehlerbehafteten aktiven Leiter und dem Erdanschlusspunkt, wobei ein Einstellen einer Kompensationsstrom-Polarität und einer Kompensationsstrom-Amplitude des Kompensationsstroms derart erfolgt, dass der DC-Schutzleiterstrom in dem Fundamenterder minimiert wird.

Bei dem (Gleichstrom-)Kompensationsverfahren wird ein Kompensationsstrom über einen Ausgangsstromkreis, der sich zwischen dem fehlerbehafteten aktiven Leiter und dem Erdanschlusspunkt erstreckt, an dem Erdanschlusspunkt des SK 1-Betriebsmittel-Gehäuses eingespeist.

Der Kompensationsstromstrom wird hinsichtlich der Polarität (Kompensationsstrom-Polarität) und der Amplitude (Kompensationsstrom-Amplitude) so eingestellt, dass der DC-Schutzleiterstrom in dem Fundamenterder minimiert wird. Im Unterschied zu der Gleichstrom-Symmetrierung wird bei der Gleichstrom-Kompensation der Kompensationsstrom nicht von dem aktiven Leiter gegenphasiger Polarität - bezogen auf die Phase des fehlerbehafteten aktiven Leiters - abgeleitet, sondern in einem Ausgangsstromkreis ausgehend von dem fehlerbehafteten aktiven Leiter zu dem Erdanschlusspunkt an dem schutzgeerdeten Gehäuse des SK 1-Betriebsmittels oder eines Schaltschranks geführt.

In weiterer Ausgestaltung erfolgt das Einstellen der Kompensationsstrom-Polarität und der Kompensationsstrom-Amplitude durch Erfassen der Amplitude und der Polarität eines von dem Gleichstromsystem in den Schutzleiter abgeleiteten DC-Fehlerstroms vor dem Erdanschlusspunkt mittels eines Stromsensors, Erzeugen einer zu dem erfassten DC-Fehlerstrom proportionalen Messspannung mittels des Stromsensors, Filtern der Messspannung mittels einer Filtereinrichtung, Erzeugen des zu der Messspannung proportionalen Kompensationsstroms mittels einer spannungsgesteuerten Stromquelle.

Der an dem fehlerbehafteten Leiter aufgrund eines Isolationsfehlers in den Schutzleiter abgeleitete und mit einem Stromsensor erfasste DC-Fehlerstrom erzeugt in dem Stromsensor eine dem erfassten DC-Fehlerstrom proportionale Messspannung. Nach einer Filterung der Messspannung wird in der spannungsgesteuerten Stromquelle der zu dieser Messspannung proportionale Kompensationsstrom erzeugt und über den Ausgangsstromkreis an dem Erdanschlusspunkt SK 1-Betriebsmittel-Gehäuses eingespeist. Ausgehend von dem Erfassen des DC-Fehlerstroms wird somit im Sinne einer Steuerung der Kompensationsstrom so eingestellt, dass der DC-Schutzleiterstrom in dem Fundamenterder minimiert wird.

Analog zu dem alternativen Vorgehen bei der Gleichstrom-Symmetrierung kann das Einstellen der Kompensationsstrom-Polarität und der Kompensationsstrom-Amplitude des Kompensationsstroms durch eine Regelung erfolgen.

Dabei wird vorzugsweise der DC-Schutzleiterstrom auf dem Schutzleiter erfasst und mittels Rückkopplung auf die spannungsgesteuerte Stromquelle zurückgeführt, sodass der Kompensationsstrom nach Polarität und Amplitude so eingestellt werden kann, dass der DC-Schutzleiterstrom im Hinblick auf einen maximal zulässigen Wert (herunter)geregelt wird.

Weiter erfolgt das Einstellen der Kompensationsstrom-Polarität und der Kompensationsstrom-Amplitude des Kompensationsstroms durch Einstellen eines spannungsgesteuerten negativen Widerstands, welcher in dem Ausgangsstromkreis angeordnet ist.

Der DC-Fehlerstrom kann durch einen Kompensationsstrom ausgeglichen werden, welcher mittels eines spannungsgesteuerten negativen Widerstands gegensinnig zu dem DC-Fehlerstrom erzeugt wird.

Auch kann analog zur Erzeugung des Symmetrierstroms durch einen PWM-Generator ein Kompensations-PWM-Signal als Kompensationsstrom mittels eines PWM-Generators erzeugt werden.

Bevorzugt wird bei einer Anordnung von mehreren SK 1-Betriebsmitteln in einem geerdeten Schaltschrank der DC-Schutzleiterstrom in einem gemeinsamen Erdungskabel des Schaltschranks minimiert.

Sind mehrere SK 1-Betriebsmittel in dem geerdeten Schaltschrank angeordnet, so kann in vorteilhafter Weise für alle in dem geerdeten Schaltschrank befindlichen SK 1-Betriebsmittel eine wirksame Schutzerdung über ein als Schutzleiter ausgeführtes gemeinsames Erdungskabel des Schaltschranks ausgeführt werden, wobei der DC-Schutzleiterstrom in dem gemeinsamen Erdungskabel minimiert wird.

In Umsetzung der vorgenannten erfindungsgemäßen Verfahren zur Minimierung eines korrosionsgefährdenden DC-Schutzleiterstroms durch Einspeisen eines Symmetrierstroms oder eines Kompensationsstroms umfasst die Erfindung erfindungsgemäße Vorrichtungen beruhend auf einer Symmetriereinrichtung oder einer Kompensationseinrichtung.

In der Symmetrieeinrichtung kann korrespondierend zu dem beanspruchten Symmetrierverfahren eine spannungsgesteuerte Stromquelle oder eine Widerstands-Schalteinrichtung zum Einsatz kommen, um den Symmetrierstrom mit der zur Minimierung des DC-Schutzleiterstroms erforderlichen Symmetrierstrom-Polarität und der Symmetrierstrom-Amplitude zu erzeugen.

In der Kompensationseinrichtung kann alternativ zu der spannungsgesteuerten Stromquelle ein spannungsgesteuerter negativer Widerstand eingesetzt werden.

Sowohl die Symmetriereinrichtung als auch die Kompensationseinrichtung können als Steuerung mit Erfassung des in den Schutzleiter abgeleiteten DC-Fehlerstroms oder als Regelung vorzugsweise mit Erfassung und Rückkopplung des minimalen DC-Schutzleiterstroms ausgeführt sein.

Zudem kann durch einen PWM-Generator die Erzeugung des Symmetrierstroms in Form eines Symmetrier-PWM-Signals oder die Erzeugung des Kompensationsstroms in Form eines Kompensations-PWM-Signals erfolgen.

In allen Fällen ist ein Stromsensor zum Erfassen der jeweiligen Stromstärke des DC-Fehlerstroms oder des DC-Schutzleiterstroms erforderlich. Dabei wird die von dem Stromsensor abgegebene Messspannung als Eingangsgröße für die Steuerung oder Regelung der Symmetriereinrichtung, einer Kompensationseinrichtung oder einer Kombination aus beiden verwendet.

In der gerätetechnischen Realisierung der erfindungsgemäßen Verfahren zur Minimierung eines korrosionsgefährdenden DC-Schutzleiterstroms erfolgt vorzugsweise zunächst eine Digitalisierung der von dem Stromsensor erzeugten proportionalen Messspannung mittels eines Analog/Digital-Umsetzers, sodass die nachfolgenden Verarbeitungsschritte auf digitaler Ebene in einem durch entsprechende Algorithmen programmierten Mikrocontroller durchgeführt werden können. Dazu zählen insbesondere die digitale Filterung der Messspannung sowie die Ausführung der jeweils beanspruchten Steuerung und Regelung des Symmetrierstroms und des Kompensationsstroms als prozessorbasierte, digitale Implementierungen.

Die Erfindung zeigt ergänzende Korrosionsschutzvorkehrungen insbesondere für Anwendungsfälle auf, in denen die in der Norm EN 50162 vorgeschlagenen Maßnahmen nicht oder nur schwer umsetzbar sind und geerdete Gleichstromsysteme nicht mit höheren Kosten verbunden sein sollen als vergleichbare Wechsel (AC)- und Drehstrom (3AC)-Netze. Insbesondere werden mit den beanspruchten Verfahren der Symmetrierung und der Kompensation sowie mit den dazu korrespondierenden Vorrichtungen (Symmetriereinrichtung und Kompensationseinrichtung) kostengünstige Maßnahmen ergriffen, die den DC-Schutzleiterstrom in einem als Fundamenterder ausgebildeten Schutzleiter an dem Erdanschlusspunkt des SK 1-Betriebsmittels oder des Schaltschranks in Form eines aktiven Korrosionsschutzes auf maximal zulässige Werte minimieren. Elektrolytische Gleichströme außerhalb des erdungstechnisch geschlossenen Systems werden reduziert und begrenzt.

Die erfindungsgemäßen Verfahren zum Ausgleich des DC-Fehlerstroms durch den Symmetrierstrom oder den Kompensationsstrom werden dabei innerhalb des schutzgeerdeten Gehäuses des SK 1-Betriebsmittels oder des Schaltschranks und nicht in dem externen Schutzleitungssystem ausgeführt. Demgemäß sind auch die entsprechenden Vorrichtungen installations- und wartungsfreundlich innerhalb der SK 1-Betriebsmittel- oder Schaltschrank-Gehäuse angeordnet, sodass auf kostenintensive Arbeiten an außerhalb der Gehäuse befindlichen Teilen der Erdungsanlage verzichtet werden kann.

Die Erfindung dient damit der Vermeidung und Minimierung von Elektrokorrosionseffekten durch DC-Streuströme, indem ein unsymmetrischer Isolationsfehlerstrom in dem erdungstechnisch geschlossenen Teilsystem wie dem SK I-Betriebsmittel, welches in geerdeter Netzform betrieben wird, durch geeignete Maßnahmen innerhalb dieses Teilsystems, also innerhalb des Gehäuses des SK I-Betriebsmittels oder des Schaltschrank-Gehäuses, ausschließlich durch metallische Stromleitung ausgeglichen wird. Zudem kann bei einem unzulässig hohen DC-Ausgleichstrom (DC-Symmetrierstrom oder Kompensationsstrom) eine automatische Abschaltung des fehlerbehafteten Gleichstromsystems ausgelöst werden.

Weitere vorteilhafte Ausgestaltungsmerkmale ergeben sich aus der nachfolgenden Beschreibung und den Zeichnungen, die eine bevorzugte Ausführungsform der Erfindung an Hand von Beispielen erläutern. Es zeigen:
**Fig. 1****:** eine Simulation eines galvanisch verbundenen Gleichstromsystems mit einem als Fundamenterder ausgebildeten Schutzleiter,
**Fig. 2****:** eine simulierte erfindungsgemäße Symmetriereinrichtung mit einer spannungsgesteuerten Stromquelle für das Gleichstromsystem,
**Fig. 3****:** eine simulierte erfindungsgemäße Symmetriereinrichtung mit einer Widerstands-Schalteinrichtung für das Gleichstromsystem,
**Fig. 4****:** eine simulierte erfindungsgemäße Kompensationseinrichtung mit einer spannungsgesteuerten Stromquelle für das Gleichstromsystem und
**Fig. 5****:** eine simulierte erfindungsgemäße Kompensationseinrichtung mit einem spannungsgesteuerten negativen Widerstand für das Gleichstromsystem.

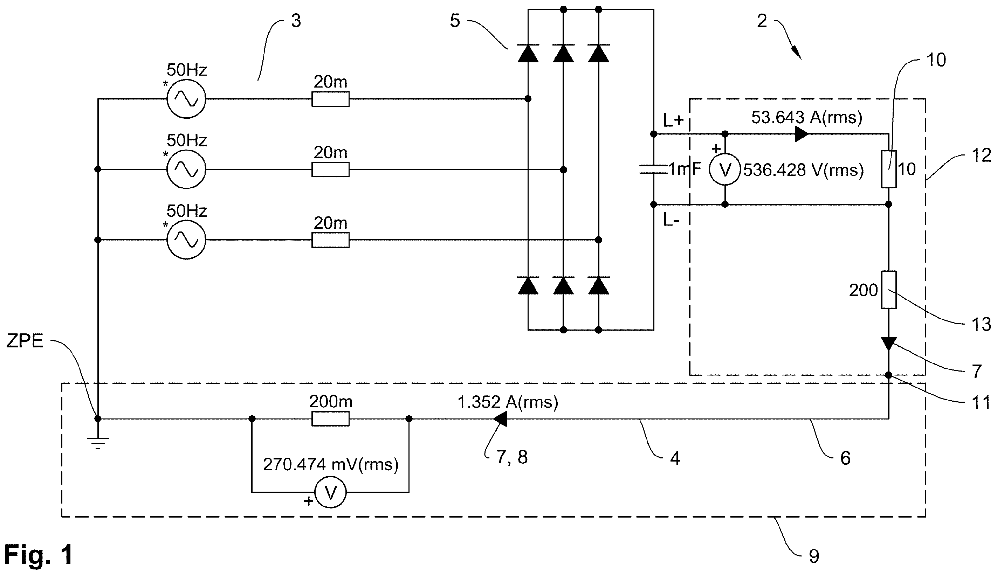

**Fig. 1** zeigt eine mit Angaben der Strom- und Spannungsverteilung versehene Simulationsanordnung eines galvanisch verbundenen Gleichstromsystems 2 mit einem als Fundamenterder 4 ausgebildeten Schutzleiter 6 in einem Fundament 9.

Das Gleichstromsystem 2 mit aktiven Leitern L+, L- ist mit einem 3AC-Netz 3 über einen Dreiphasen-Gleichrichter 5 galvanisch verbunden.

Ein als 10Ω Widerstandslast simuliertes SK 1-Betriebsmittel 10 mit schutzgeerdeten Gehäuse 12 ist an die aktiven Leiter L+, L- angeschlossen. Zwischen dem aktiven Leiter L- und dem schutzgeerdeten Gehäuse 12 ist ein Isolationsfehler 13 - hier beispielhaft in Form eines (veränderlichen) 200Ω Widerstands - als Gleichstromableitung nachgebildet, über den ein DC-Fehlerstrom 7 fließt. Der DC-Fehlerstrom 7 setzt sich über den Erdanschlusspunkt 11 des Gehäuses 12 in dem als Fundamenterder 4 ausgebildeten Schutzleiter 6 als DC-Schutzleiterstrom 8 fort. Entsprechend den normativen Anforderungen weist der Fundamenterder 4 vom zentralen Erdungspunkt ZPE bis zu dem Erdanschlusspunkt 11 einen Widerstandswert von maximal 200mΩ auf.

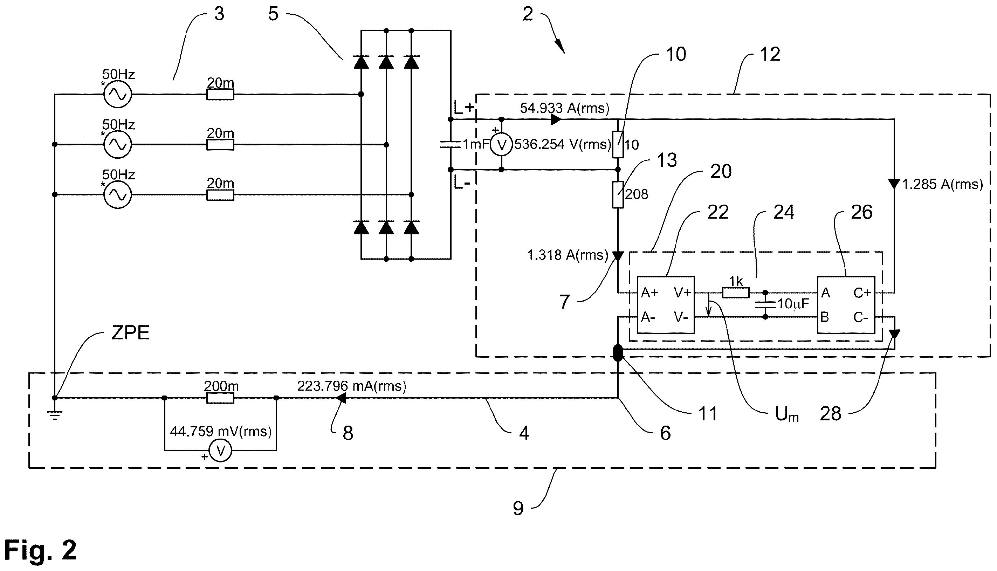

In **Fig. 2** ist eine simulierte erfindungsgemäße Symmetriereinrichtung 20 mit einer spannungsgesteuerten Stromquelle 26 für das Gleichstromsystem 2 dargestellt.

Die folgenden Simulationsanordnungen spiegeln die erfindungsgemäßen Lösungen auf funktionaler Ebene wider. In der gerätetechnischen Umsetzung werden die beanspruchten Verarbeitungsschritte nach einer eingangsseitigen Analog/Digital-Umsetzung vorzugsweise als digitale Signalverarbeitungsalgorithmen auf einem Mikrocontroller implementiert.

Die Simulationsanordnung zeigt das in dem Gleichstromsystem 2 geerdet betriebene SK 1-Betriebsmittel 10 sowie einen hier als 208Ω Widerstand nachgebildeten Isolationsfehler 13 zwischen dem aktiven Leiter L- und dem an dem schutzgeerdeten Gehäuse 12 des SK 1 Betriebsmittels 10 befindlichen Erdanschlusspunkt 11.

Die Symmetriereinrichtung 20 umfasst einen Stromsensor 22, welcher die Amplitude und die Polarität des von dem fehlerbehafteten aktiven Leiter L- in den Schutzleiter 6 abgeleiteten DC-Fehlerstroms 7 erfasst und pro ein Ampere des eingangsseitigen DC-Fehlerstroms 7 (Eingang A+, A- des Stromsensors 22) daraus eine zu dem erfassten DC-Fehlerstrom 7 proportionale Messspannung Uₘ von einem Volt an dem Ausgang V+, V- des Stromsensors 22 erzeugt.

Der Stromsensor 22 ist in der zu realisierenden erfindungsgemäßen Vorrichtung vorzugsweise als Gleichstrom-Messstromwandler (DC-Differenzstromsensor) ausgeführt.

Eine nachgeschaltete Filtereinrichtung 24 besteht aus einem einfachen RC-Tiefpass zu Unterdrückung von netzfrequenten Wechselstromanteilen.

Die spannungsgesteuerte Stromquelle 26 erzeugt pro Volt Eingangsspannung, die an den Eingängen A, B der Stromquelle 26 anliegt, einen über die Ausgänge C+, C- der Stromquelle 26 fließenden Symmetrierstrom 28 in einem Ausgangsstromkreis, welcher zwischen dem nicht fehlerbehafteten (zu L- gegenphasigen) aktiven Leiter L+ und dem Erdanschlusspunkt 11 an dem schutzgeerdeten Gehäuses 12 verläuft.

Die Symmetriereinrichtung 20 bewirkt an dem Erdanschlusspunkt 11 eine Symmetrierung der DC-Stromableitung gegen das schutzgeerdete Gehäuse 12 und reduziert damit den DC-Stromanteil des DC-Schutzleiterstroms 8 in dem Schutzleiter 6, um Elektrokorrosionseffekte in dem Fundamenterder 4 zu vermeiden.

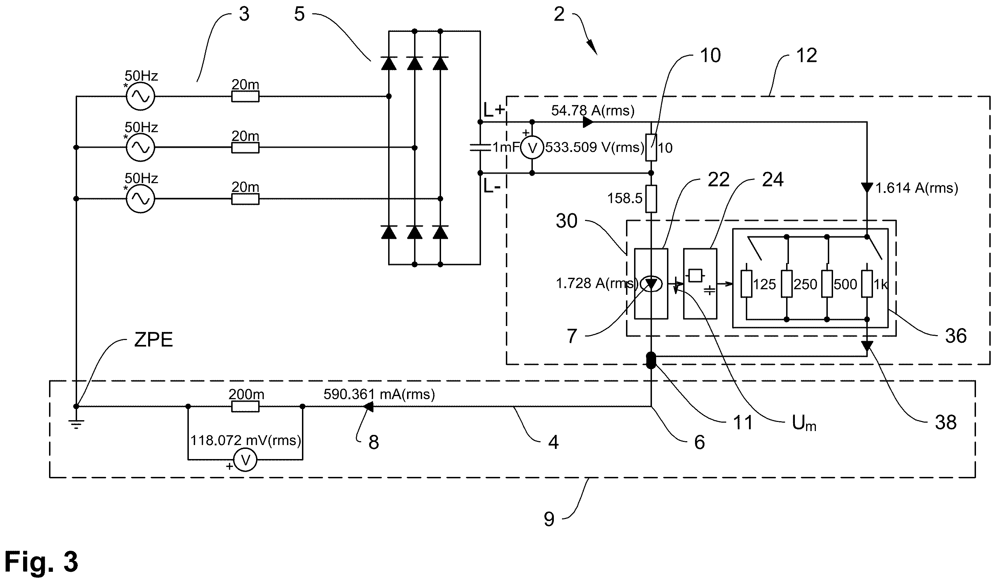

**Fig. 3** zeigt eine simulierte erfindungsgemäße Symmetriereinrichtung 30 mit einer Widerstands-Schalteinrichtung 36 für das Gleichstromsystem 2.

Die erfindungsgemäße Symmetriereinrichtung 30 umfasst ebenfalls einen Stromsensor 22, mit dem die Amplitude und die Polarität des von dem fehlerbehafteten aktiven Leiter L- in den Schutzleiter 6 abgeleiteten DC-Fehlerstroms 7 erfasst und eine entsprechende Messspannung Uₘ erzeugt wird, und weiter eine Filtereinrichtung 24 zur Unterdrückung der netzfrequenten Wechselstromanteile.

Alternativ zu der der spannungsgesteuerten Stromquelle 26 (Fig. 2) wird in dieser Ausgestaltung der zu der gefilterten Messspannung Uₘ proportionale Symmetrierstrom 38 durch Schalten von Ausgleichswiderständen mittels einer Widerstands-Schalteinrichtung 36 in dem Ausgangsstromkreis zwischen dem nicht fehlerbehafteten aktiven Leiter L+ und dem Erdanschlusspunkt 11 bewirkt.

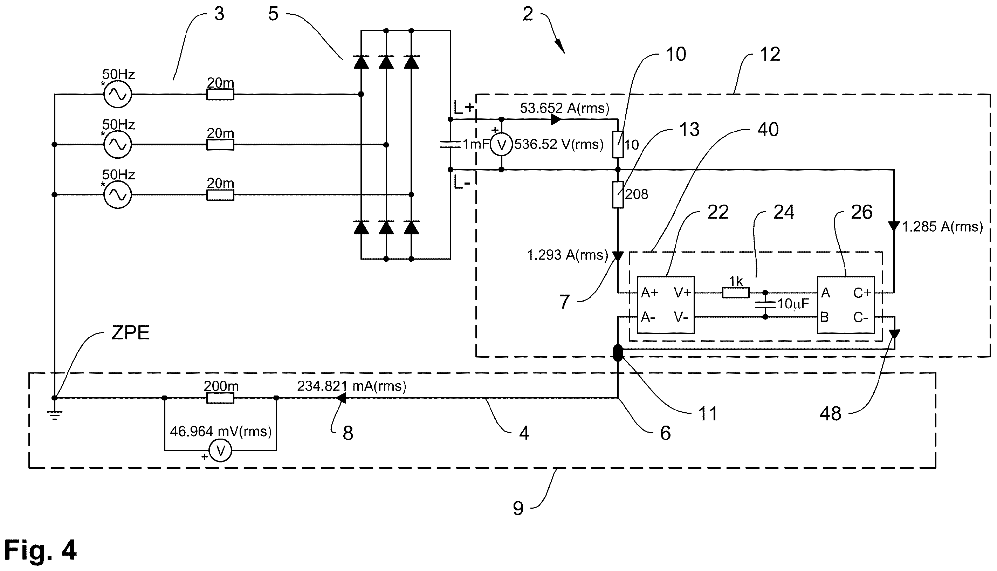

**Fig. 4** zeigt eine simulierte erfindungsgemäße Kompensationseinrichtung 40 mit einer spannungsgesteuerten Stromquelle 26 für das Gleichstromsystem 2.

Der Aufbau der Kompensationseinrichtung 40 entspricht weitgehend dem der Symmetriereinrichtung 20 mit einer spannungsgesteuerten Stromquelle 26 (Fig. 2), hier aber zum Erzeugen des Kompensationsstroms 48 mit einer geeigneten Kompensationsstrom-Polarität und einer Kompensationsstrom-Amplitude. Im Gegensatz zu der Symmetrierung ist bei der Kompensation der Kompensationsstrom 48 nicht von dem nicht fehlerbehafteten, aktiven Leiter L+ mit gegenphasiger (in Bezug auf den fehlerbehafteten aktiven Leiter L-) Polarität abgeleitet, sondern der diesen Kompensationsstrom 48 führende Ausgangskreis erstreckt sich über den fehlerbehafteten Leiter L- zu dem Erdanschlusspunkt 11.

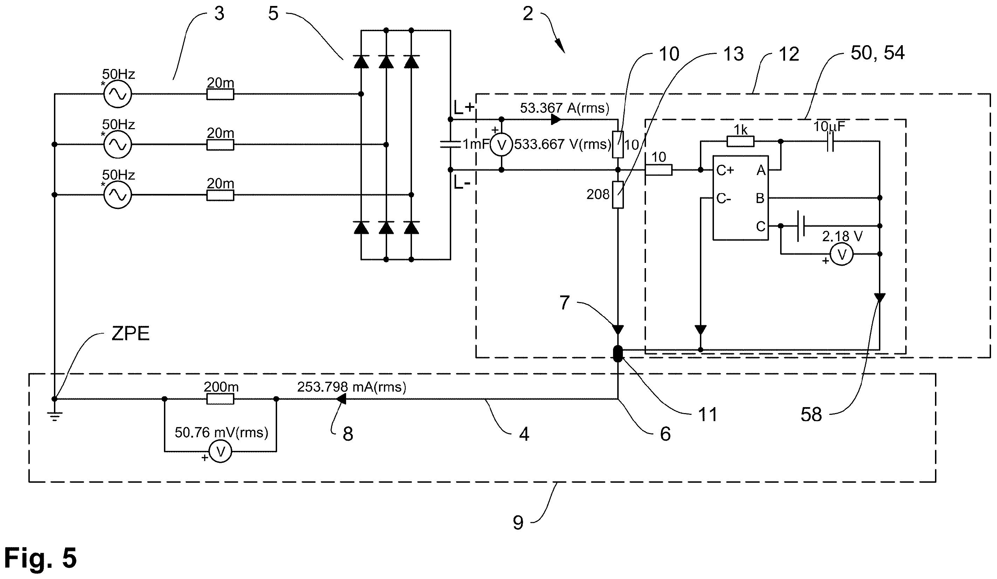

In **Fig. 5** ist eine simulierte erfindungsgemäße Kompensationseinrichtung 50 mit einem spannungsgesteuerten negativen Widerstand 54 für das Gleichstromsystem 2 dargestellt.

In dieser Ausgestaltung wird der Kompensationsstrom 58 durch einen spannungsgesteuerten negativen Widerstand 54 erzeugt, wobei der steuer- oder regelbare negative Widerstand 54 auf verschiedene Art als aktive Baugruppe mit negativ verlaufender Strom-Spannungskennlinie in analoger oder digitaler Elektronik, beispielsweise in Form eines Negativimpedanzkonverters, realisiert werden kann.

Überschreitet der erfindungsgemäß erzeugte DC-Symmetrierstrom oder der Kompensationsstrom eine als kritisch zu betrachtende (Symmetrierstrom- oder Kompensationsstrom-) Amplitude, so kann vorzugsweise das fehlerbehaftete, geerdete Gleichstromsystem 2 automatisch abgeschaltet werden.

## Patentansprüche

1. Verfahren zur Minimierung eines korrosionsgefährdenden DC-Schutzleiterstroms (8) für ein über einen als Fundamenterder (4) ausgebildeten Schutzleiter (6) geerdetes Gleichstromsystem (2) mit angeschlossenem SK 1-Betriebsmittel (10), umfassend die Verfahrensschritte:
Einspeisen eines Symmetrierstroms (28) an einem Erdanschlusspunkt (11) an einem Gehäuse (12) des SK 1-Betriebsmittels (10) über einen Ausgangsstromkreis zwischen einem nicht fehlerbehafteten aktiven Leiter (L+) und dem Erdanschlusspunkt (11),
wobei ein Einstellen einer Symmetrierstrom-Polarität und einer Symmetrierstrom-Amplitude des Symmetrierstroms (28, 38) derart erfolgt, dass der DC-Schutzleiterstrom (8) in dem Fundamenterder (4) minimiert wird.

2. Verfahren nach Anspruch 1,
**dadurch gekennzeichnet, dass**
das Einstellen der Symmetrierstrom-Polarität und der Symmetrierstrom-Amplitude erfolgt durch
Erfassen der Amplitude und der Polarität eines von dem Gleichstromsystem (2) in den Schutzleiter (6) abgeleiteten DC-Fehlerstroms (7) vor dem Erdanschlusspunkt (11) mittels eines Stromsensors (22), Erzeugen einer zu dem erfassten DC-Fehlerstrom (7) proportionalen Messspannung (Uₘ) mittels des Stromsensors (22),
Filtern der Messspannung (Uₘ) mittels einer Filtereinrichtung (24) und
Erzeugen des zu der Messspannung (Uₘ) proportionalen Symmetrierstroms (28) mittels einer spannungsgesteuerten Stromquelle (26).

3. Verfahren nach Anspruch 1,
**dadurch gekennzeichnet, dass**
das Einstellen der Symmetrierstrom-Polarität und der Symmetrierstrom-Amplitude durch eine Regelung einer spannungsgesteuerten Stromquelle (26) erfolgt.

4. Verfahren nach Anspruch 1,
**dadurch gekennzeichnet, dass**
das Einstellen der Symmetrierstrom-Polarität und der Symmetrierstrom-Amplitude erfolgt durch
Erfassen der Amplitude und der Polarität eines von dem Gleichstromsystem (2) in den Schutzleiter (6) abgeleiteten DC-Fehlerstroms (7) vor dem Erdanschlusspunkt (11) mittels eines Stromsensors (22), Erzeugen einer zu dem erfassten DC-Fehlerstrom (7) proportionalen Messspannung (Uₘ) mittels des Stromsensors (22),
Filtern der Messspannung (Uₘ) mittels einer Filtereinrichtung (24) und durch
Schalten von Ausgleichswiderständen mittels einer Widerstands-Schalteinrichtung (36) in dem Ausgangsstromkreis zwischen dem nicht fehlerbehafteten aktiven Leiter (L+) und dem Erdanschlusspunkt (11), um den zu der Messspannung (Uₘ) proportionalen Symmetrierstrom (38) zu erzeugen.

5. Verfahren nach Anspruch 4,
**dadurch gekennzeichnet, dass**
das Schalten der Ausgleichswiderstände iterativ gesteuert durch einen Näherungsalgorithmus erfolgt.

6. Verfahren nach Anspruch 1,
**dadurch gekennzeichnet, dass**
das Einstellen der Symmetrierstrom-Polarität und der Symmetrierstrom-Amplitude durch eine Regelung mit einer Widerstands-Schalteinrichtung (36) erfolgt.

7. Verfahren nach Anspruch 1,
**dadurch gekennzeichnet, dass**
als Symmetrierstrom ein Symmetrier-PWM-Signal mittels eines PWM-Generators erzeugt wird.

8. Verfahren zur Minimierung eines korrosionsgefährdenden DC-Schutzleiterstroms (8) für ein über einen als Fundamenterder (4) ausgebildeten Schutzleiter (6) geerdetes Gleichstromsystem (2) mit angeschlossenem SK 1-Betriebsmittel (10), umfassend die Verfahrensschritte:
Einspeisen eines Kompensationsstroms (48, 58) an einem Erdanschlusspunkt (11) an einem Gehäuse (12) des SK-1-Betriebsmittels (10) über einen Ausgangsstromkreis zwischen einem fehlerbehafteten aktiven Leiter (L-) und dem Erdanschlusspunkt (11),
wobei ein Einstellen einer Kompensationsstrom-Polarität und einer Kompensationsstrom-Amplitude des Kompensationsstroms (48, 58) derart erfolgt, dass der DC-Schutzleiterstrom (8) in dem Fundamenterder (4) minimiert wird.

9. Verfahren nach Anspruch 8,
**dadurch gekennzeichnet, dass**
das Einstellen der Kompensationsstrom-Polarität und der Kompensationsstrom-Amplitude erfolgt durch
Erfassen der Amplitude und der Polarität eines von dem Gleichstromsystem (2) in den Schutzleiter (6) abgeleiteten DC-Fehlerstroms (7) vor dem Erdanschlusspunkt (11) mittels eines Stromsensors (22), Erzeugen einer zu dem erfassten DC-Fehlerstrom (7) proportionalen Messspannung (Uₘ) mittels des Stromsensors,
Filtern der Messspannung (Uₘ) mittels einer Filtereinrichtung,
Erzeugen des zu der Messspannung (Uₘ) proportionalen Kompensationsstroms (48) mittels einer spannungsgesteuerten Stromquelle.

10. Verfahren nach Anspruch 8,
**dadurch gekennzeichnet, dass**
das Einstellen der Kompensationsstrom-Polarität und der Kompensationsstrom-Amplitude des Kompensationsstroms (48) durch eine Regelung erfolgt.

11. Verfahren nach Anspruch 8,
**dadurch gekennzeichnet, dass**
das Einstellen der Kompensationsstrom-Polarität und der Kompensationsstrom-Amplitude des Kompensationsstroms (58) durch Einstellen eines spannungsgesteuerten negativen Widerstands (54) erfolgt, welcher in dem Ausgangsstromkreis angeordnet ist.

12. Verfahren nach Anspruch 8,
**dadurch gekennzeichnet, dass,**
als Kompensationsstrom ein Kompensations-PWM-Signal mittels eines PWM-Generators erzeugt wird.

13. Verfahren nach einem der Ansprüche 1 bis 12,
**dadurch gekennzeichnet, dass**
bei einer Anordnung von mehreren SK 1-Betriebsmitteln (10) in einem geerdeten Schaltschrank der DC-Schutzleiterstrom (8) in einem gemeinsamen Erdungskabel des Schaltschranks minimiert wird.

14. Vorrichtung zur Minimierung eines korrosionsgefährdenden DC-Schutzleiterstroms (8) für ein über einen als Fundamenterder (4) ausgebildeten Schutzleiter (6) geerdetes Gleichstromsystem (2) mit angeschlossenem SK 1-Betriebsmittel (10),
**gekennzeichnet durch**
eine Symmetriereinrichtung (20, 30), welche einen Symmetrierstrom (28, 38) an einem Erdanschlusspunkt (11) an einem Gehäuse (12) des SK 1-Betriebsmittels (10) über einen Ausgangsstromkreis zwischen einem nicht fehlerbehafteten aktiven Leiter (L+) und dem Erdanschlusspunkt (11) einspeist und die konfiguriert ist zum Einstellen einer Symmetrierstrom-Polarität und einer Symmetrierstrom-Amplitude des Symmetrierstroms (28, 38) derart, dass der DC-Schutzleiterstrom (8) in dem Fundamenterder (4) minimiert wird.

15. Vorrichtung nach Anspruch 14,
**gekennzeichnet durch**
einen Stromsensor (22) zum Erfassen der Amplitude und der Polarität eines von dem Gleichstromsystem (2) in den Schutzleiter (6) abgeleiteten DC-Fehlerstroms (7) vor dem Erdanschlusspunkt (11) und zum Erzeugen einer zu dem erfassten DC-Fehlerstrom (7) proportionalen Messspannung (Uₘ), eine Filtereinrichtung (24) zur Filterung der Messspannung (Uₘ) und eine spannungsgesteuerte Stromquelle (26) zum Erzeugen des zu der Messspannung (Uₘ) proportionalen Symmetrierstroms (28).

16. Vorrichtung nach Anspruch 14,
**gekennzeichnet durch**
eine Regelung mit einer spannungsgesteuerten Stromquelle (26) zum Einstellen der Symmetrierstrom-Polarität und der Symmetrierstrom-Amplitude.

17. Vorrichtung nach Anspruch 14,
**gekennzeichnet durch**
einen Stromsensor (22) zum Erfassen der Amplitude und der Polarität eines von dem Gleichstromsystem (2) in den Schutzleiter (6) abgeleiteten DC-Fehlerstroms (7) vor dem Erdanschlusspunkt (11) und zum Erzeugen einer zu dem erfassten DC-Fehlerstrom (7) proportionalen Messspannung (Uₘ), eine Filtereinrichtung (24) zur Filterung der Messspannung (Uₘ) und eine Widerstands-Schalteinrichtung (36) zum Schalten von Ausgleichswiderständen in dem Ausgangsstromkreis zwischen dem nicht fehlerbehafteten aktiven Leiter (L+) und dem Erdanschlusspunkt (11), um den zu der Messspannung (Uₘ) proportionalen Symmetrierstrom (38) zu erzeugen.

18. Vorrichtung nach Anspruch 17,
**dadurch gekennzeichnet,**
**dass** die Widerstands-Schalteinrichtung (36) zur Ausführung eines iterativ gesteuerten Schaltens der Ausgleichswiderstände durch einen Näherungsalgorithmus konfiguriert ist.

19. Vorrichtung nach Anspruch 14,
**gekennzeichnet durch**
eine Regelung mit einer Widerstands-Schalteinrichtung (36) zum Einstellen der Symmetrierstrom-Polarität und der Symmetrierstrom-Amplitude.

20. Vorrichtung nach Anspruch 14,
**gekennzeichnet durch**
einen PWM-Generator zum Erzeugen eines Symmetrier-PWM-Signals als Symmetrierstrom.

21. Vorrichtung zur Minimierung eines korrosionsgefährdenden DC-Schutzleiterstroms (8) für ein über einen als Fundamenterder (4) ausgebildeten Schutzleiter (6) geerdetes Gleichstromsystem (2) mit angeschlossenem SK 1-Betriebsmittel (10)
**gekennzeichnet durch**
eine Kompensationseinrichtung (40, 50), welche einen Kompensationsstrom (48, 58) an einem Erdanschlusspunkt (11) an einem Gehäuse (12) des SK-1-Betriebsmittels (10) über einen Ausgangsstromkreis zwischen einem fehlerbehafteten aktiven Leiter (L-) und dem Erdanschlusspunkt (11) einspeist und die konfiguriert ist zum Einstellen einer Kompensationsstrom-Polarität und einer Kompensationsstrom-Amplitude des Kompensationsstroms (48, 58) derart, dass der DC-Schutzleiterstrom (8) in dem Fundamenterder (4) minimiert wird.

22. Vorrichtung nach Anspruch 21,
**gekennzeichnet durch**
einen Stromsensor (22) zum Erfassen der Amplitude und der Polarität eines von dem Gleichstromsystem (2) in den Schutzleiter (6) abgeleiteten DC-Fehlerstroms (7) vor dem Erdanschlusspunkt (11) und zum Erzeugen einer zu dem erfassten DC-Fehlerstrom (7) proportionalen Messspannung (Uₘ), eine Filtereinrichtung (24) zur Filterung der Messspannung (Uₘ) und eine spannungsgesteuerte Stromquelle (26) zum Erzeugen des zu der Messspannung proportionalen Kompensationsstroms (48).

23. Vorrichtung nach Anspruch 21,
**gekennzeichnet durch**
eine Regelung mit einer spannungsgesteuerten Stromquelle (26) zum Einstellen der Kompensationsstrom-Polarität und der Kompensationsstrom-Amplitude des Kompensationsstroms (48).

24. Vorrichtung nach Anspruch 21,
**gekennzeichnet durch**
einen spannungsgesteuerten negativen Widerstand (54), welcher in dem Ausgangsstromkreis angeordnet ist, zum Einstellen der Kompensationsstrom-Polarität und der Kompensationsstrom-Amplitude des Kompensationsstroms (58).

25. Vorrichtung nach Anspruch 21,
**gekennzeichnet durch**
einen PWM-Generator zum Erzeugen eines Kompensations-PWM-Signals als Kompensationsstrom.

26. Vorrichtung nach einem der Ansprüche 14 bis 25,
**gekennzeichnet durch**
ein gemeinsames Erdungskabel eines Schaltschranks bei einer Anordnung von mehreren SK 1-Betriebsmitteln (10) in dem geerdeten Schaltschrank, wobei der DC-Schutzleiterstrom auf dem gemeinsamen Erdungskabel minimiert wird.
